# EUROPEAN PATENT SPECIFICATION

(11) **EP 2 447 505 B1**
(45) Date of publication and mention of the grant of the patent: **27.11.2019**
(21) Application number: 11186992.1
(22) Date of filing: 27.10.2011
(51) Int. Cl.: F02C 6/16, F02C 7/141

(54) **Inlet air cooling and moisture removal methods and devices in advanced adiabatic compressed air energy storage systems**
Zuluftkühlungs- und Feuchtigkeitsentfernungsverfahren und -vorrichtungen in modernen adiabatischen Druckluftenergiespeichersystemen
Procédés de refroidissement d'air d'entrée et d'élimination de l'humidité et dispositifs dans les systèmes avancés de stockage d'énergie à air comprimé adiabatiquement

(30) Priority: 29.10.2010 US 915422
(43) Date of publication of application: 02.05.2012
(73) Proprietor: Nuovo Pignone S.p.A., 50127 Florence (IT)
(72) Inventor: Anikhindi, Sanjay, 50127 Florence (IT); Kosamana, Bhaskara, 50127 Florence (IT)
(74) Representative: BRP Renaud & Partner mbB Rechtsanwälte Patentanwälte Steuerberater

(56) References cited:
- JP-A- H07 247 862
- US-A- 4 150 547
- US-A- 4 849 648
- US-A- 4 936 109

## Description

### TECHNICAL FIELD

The embodiments of the subject matter disclosed herein generally relate to power generation systems and more specifically to advanced adiabatic compressed air energy storage systems.

### BACKGROUND

JP 3507541 B2 discloses a gas turbine plant and US 4,849,648A discloses a compressed gas system.

As population increases, the desire for more electrical power is also generally increasing. Demand for this power typically varies during the course of a day with afternoon and early evening hours generally being the time of peak demand with later night and very early morning hours generally being the time of lowest demand for power. However, power generation systems need to meet both the lowest and highest demand systems for efficiently delivering power at the various demand levels.

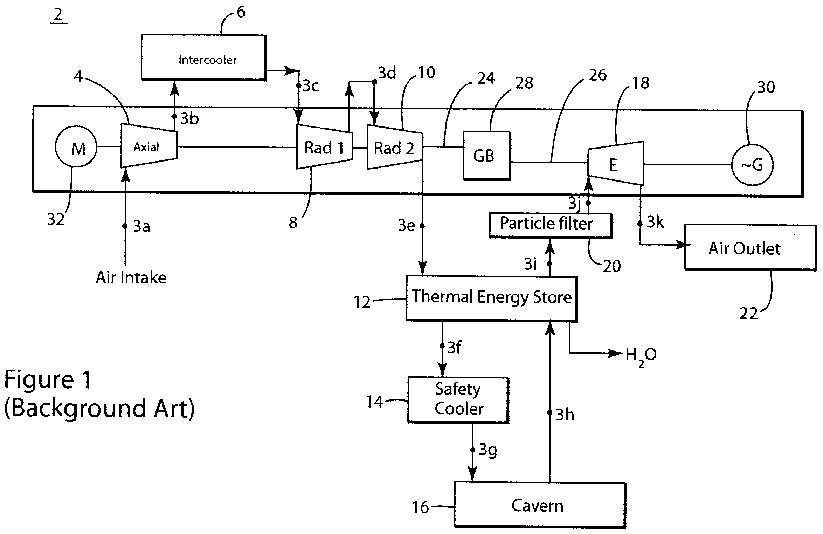

One system attempts to solve this problem by storing energy generated during off-peak demand hours for use during peak demand hours. This system is called an Advanced Adiabatic Compressed Air Energy Storage (AA-CAES) system and is shown in Figure 1 as part of a power generation system 2. The power generation system 2 is now generally described by following the path of the air flow. Initially in step 3a, air is taken into an axial compressor 4 and compressed during which the air is put under pressure and undergoes an increase in temperature. This air is exhausted in step 3b, and undergoes cooling at the Intercooler 6 to be cooled to the desired temperature for further compression. The air flow is then entered in step 3c to a first radial compressor 8. The air is then compressed by the first radial compressor 8, exits the first radial compressor 8 and in step 3d enters a second radial compressor 10 for further compression.

The air flow then goes, in step 3e, from the second radial compressor 10 to an energy storage unit, e.g., a Thermal Energy Store 12. The hot compressed air from the second radial compressor 10 is then cooled by the Thermal Energy Store 12. The heat energy is stored in the Thermal Energy Store 12 for future use and any water that is generated by the cooling process is drained off. The cooled compressed air is then sent to a Safety Cooler 14 in step 3f, where the air is further cooled prior to being sent in step 3g to a storage facility, e.g., cavern 16. This storage of the compressed air in the cavern 16 and the storage of the energy in the Thermal Energy Store 12 typically occurs during non-peak demand operation of the power generation system 2.

When the demand for power from the power generation system 2 increases to a desired point, energy output can be increased by releasing the stored compressed air back into the system to drive an expander 18, e.g., a turbine. For example, the cavern 16 releases some of the stored compressed air, in step 3h, to the Thermal Energy Store 12 for heating. Heat energy is transferred from the Thermal Energy Store 12 to the compressed air and the heated compressed air flows to a particle filter 20 in step 3i. The heated compressed air then flows, in step 3j, to an expansion section of turbine 18. During expansion the air cools and undergoes a pressure drop while producing the work which drives the shaft 26 which in turn spins a portion of a generator 30 for power generation. After expansion the air flows from the turbine 18 to an air outlet 22 in step 3k, typically for release to atmosphere. Power generation system 2 can also include a shaft 24 for the compressors, a gear box 28 and a motor 32.

While the system shown in Figure 1 does allow for storing energy for use during peak demand hours, it can be appreciated that power needs are going to grow and finding ways to meet the growing demand is desirable.

Accordingly, systems and methods for improving efficiency in power generation systems are desirable.

### SUMMARY

The present invention is defined in the accompanying claims.

According to an exemplary embodiment there is a system for cooling air in a power generation system. The system includes: an air handling unit configured to receive air, to cool the air and to remove moisture from the air; the first compressor fluidly connected to the air handling unit and configured to receive the air from the air handling unit and to exhaust a first compressed, heated air flow; a vapor absorption chiller connected to the first compressor and configured to transfer heat energy between a plurality of mediums and to cool the first compressed, heated air flow; a second compressor connected to the vapor absorption chiller and configured to receive the cooled first compressed, heated air flow and to exhaust a second compressed, heated air flow; an energy storage unit connected to the second compressor and configured to store heat energy from the second compressed, heated air flow; and a storage facility connected to the energy storage unit and configured to store a cooled, compressed air received from the energy storage unit and to selectively release the cooled, compressed air back into the power generation system.

According to another exemplary embodiment there is a system for cooling air in a power generation system. The system includes: an air handling unit configured to receive air, to cool the air and to remove moisture from the air; a first compressor fluidly connected to the air handling unit and configured to receive the air from the air handling unit and to exhaust a first compressed, heated air flow; a vapor absorption chiller connected to the first compressor and configured to transfer heat energy between a plurality of mediums and to cool the first compressed, heated air flow; and a second compressor connected to the vapor absorption chiller and configured to receive the cooled first compressed, heated air flow and to exhaust a second compressed, heated air flow.

According to another exemplary embodiment there is a method for cooling air in a power generation system. The method includes: receiving air at an air handling unit; cooling the air at the air handling unit; removing moisture from the air at the air handling unit; compressing air by a first compressor; exhausting a first compressed, heated air flow from the first compressor; transferring heat energy between a plurality of mediums at an vapor absorption chiller; cooling the first compressed, heated air flow at the vapor absorption chiller; compressing the cooled first compressed, heated air flow; and exhausting a second compressed, heated air flow.

### BRIEF DESCRIPTION OF THE DRAWINGS

The accompanying drawings illustrate exemplary embodiments, wherein:
Figure 1 depicts a power generation system and an Advanced Adiabatic Compressed Air Energy Storage (AA-CAES) system;
Figure 2 illustrates a power generation system and an efficient AA-CAES system not falling under the claimed invention;
Figure 3 shows the system of Figure 2 with illustrative values;
Figure 4 illustrates a power generation system and another efficient AA-CAES system not falling under the claimed invention;
Figure 5 shows the system of Figure 4 with illustrative values;
Figure 6 illustrates an air cooling system in a power generation system according to exemplary embodiments falling under the present invention;
Figure 7 illustrates an air handler and a vapor absorption chiller according to exemplary embodiments falling under the present invention;
Figure 8 shows the system of Figure 6 with illustrative values according to exemplary embodiments;
Figures 9 and 10 are flowcharts showing a method for capturing heat energy in a power generation system not falling under the claimed invention; and
Figure 11 is a flowchart showing a method for cooling air in a power generation system according to exemplary embodiments falling under the present invention.

### DETAILED DESCRIPTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

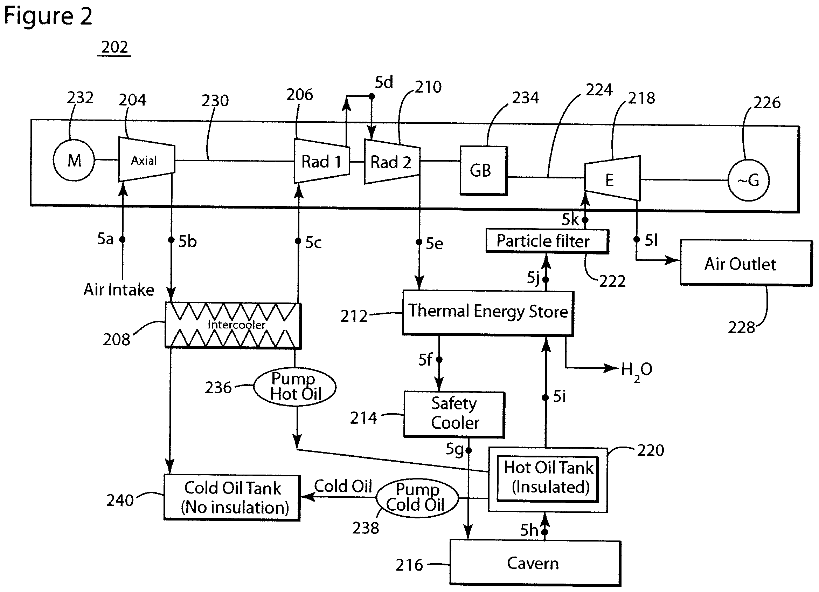

As described in the Background section, systems and methods for improving efficiency in power generation systems are desirable. Exemplary embodiments described herein provide systems and methods for improving efficiency in power generation systems. According to exemplary embodiments, heat energy typically lost between compressors in a Compressed Air Energy Storage (CAES) system can be recovered for use in a modified adiabatic CAES (AA-CAES) system, an example of which is shown in Figure 2.

According to exemplary embodiments, Figure 2 shows a power generation system 202 which includes a modified AA-CAES system which captures and stores the heat energy, which is typically lost between an axial compressor 204 and a radial compressor 206, for use during peak or near peak load conditions. By capturing this heat energy there can be approximately an 8-10 percent improvement in overall operating efficiency of the power generation system 202 when compared with the system 2 shown in Figure 1. This system will now be described by generally following the flow of air in the system starting with an air intake to the axial compressor 204. Initially in step 5a, air is taken into an axial compressor 204 and compressed during which the air is put under pressure and undergoes an increase in temperature. This air is exhausted from the axial compressor 204 in step 5b, and undergoes heat exchange in a heat exchanger, e.g., Intercooler 208, with oil which is in its own closed loop system. This heat exchange and the closed loop system for the oil are explained in more detail below. The cooled air flow then enters, in step 5c, the first radial compressor 206. The air is then compressed by the first radial compressor 206, exits the first radial compressor 206 and in step 5d enters a second radial compressor 210 for further compression. It is noted that more or less radial compressors may be used, for example the power generation system 202 can include an axial compressor 204 and a single radial compressor 206.

The air flow then goes in step 5e from the second radial compressor 210 to an energy storage unit, e.g., a Thermal Energy Store 212. The hot compressed air from the second radial compressor 210 is then cooled by the Thermal Energy Store 212. The heat energy is stored in the Thermal Energy Store 212 for future use and any water that is generated by the cooling process is drained off. The cooled compressed air is then sent to a Safety Cooler 214 in step 5f, where the air is further cooled prior to being sent in step 5g to a storage facility, e.g., cavern 216. This storage of the compressed air in the cavern 216 and the storage of the energy in the Thermal Energy Store 212 typically occurs during non-peak demand operation of the power generation system 202.

When the demand on the power generation system 202 increases to a desired point, energy output can be increased by releasing the stored compressed air back into the system to drive an expander 218, e.g., a turbine. For example, the cavern 216 releases some of the stored compressed air in step 5h which undergoes preheating in an insulated hot oil tank 220. The released compressed air then flows to the Thermal Energy Store 212 for heating in step 5i. Heat energy is transferred from the Thermal Energy Store 212 to the compressed air and the heated compressed air flows (optionally) to a particle filter 222 in step 5j. The heated compressed air then flows in step 5k from the particle filter 222 to an expansion section of turbine 218. During expansion the air cools and undergoes a pressure drop while producing the work which drives the shaft 224, which in turn spins a portion of a generator 226 for generating power. After expansion the air flows from the turbine 218 to an air outlet 228 in step 5j, typically for release to atmosphere. The power generation system 202 can also include a shaft 230 for the compressors, a gear box 234 and a motor 232 for driving the compressor 204.

Returning now to the Intercooler 208 and the closed loop oil system, the flow of the oil which supports the heat energy transfer described above will now be described. According to exemplary embodiments, oil is initially heated in the Intercooler 208 by the exhaust air from the axial compressor 204. Other types of compressors may be used in the power generation system 202. This heated oil is transferred from the Intercooler 208 by, e.g., a hot oil pump 236, to the insulated hot oil tank 220. As previously described, heat is transferred from the hot oil to the compressed air when released from the cavern 216. This cooled oil is then pumped by a cold oil pump 238 to a cold oil tank 240 which is typically not insulated. From there the cooled oil is pumped back to the Intercooler 208 to continue the process again. The oil used for this closed loop heat transfer process can have a high specific heat. The oil may be any di-thermic oil, for example, a Dowtherm fluid that has a specific heat of 2.3 kJ/kg-K at substantially 250° C.

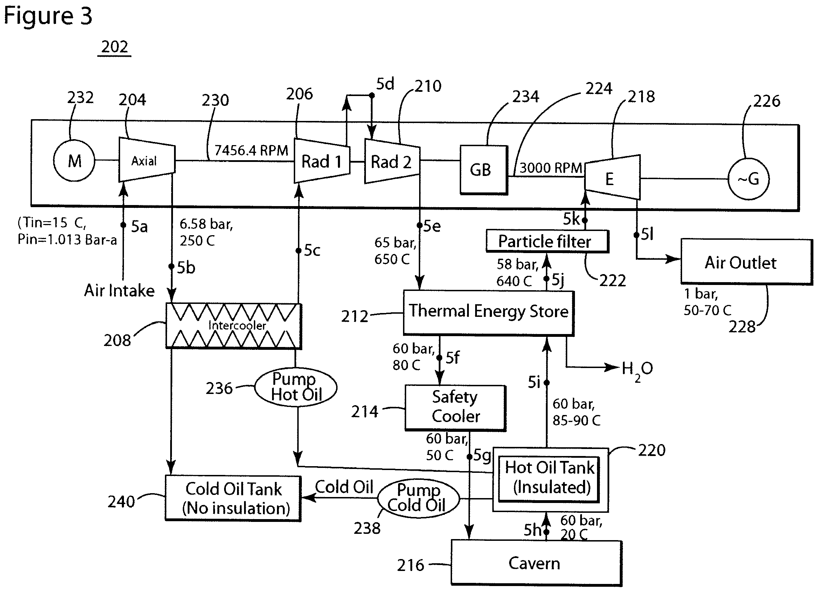

According to an exemplary embodiment, an illustrative example with values of pressures and temperatures of the air and oil at various points of the system shown in Figure 2 is shown in Figure 3. These values are exemplary and not intended to limit the embodiments. The system in Figure 3 will operate as described above with respect to the system shown in Figure 2 and thus this description is omitted.

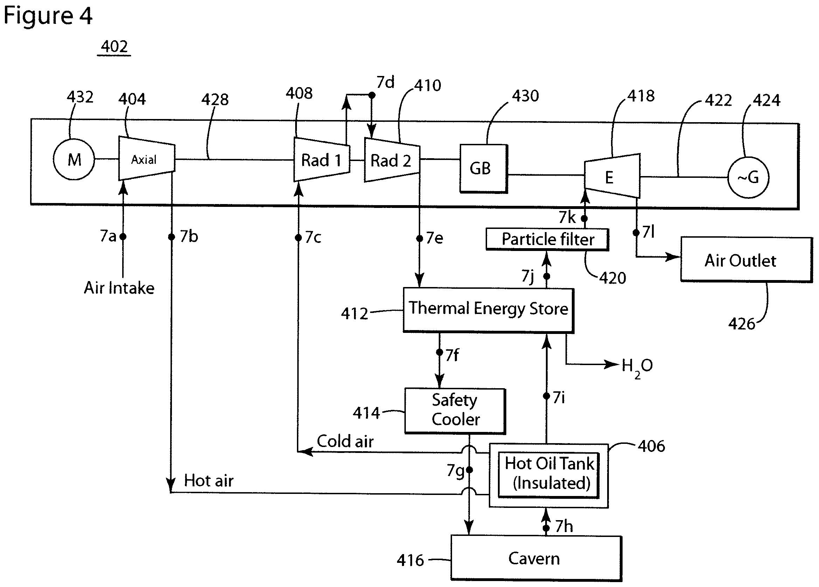

According to another exemplary embodiment, heat energy can be captured and stored for future use in a power generation system 402 as shown in Figure 4. The power generation system 402 includes a modified AA-CAES system which stores the heat energy, which is typically lost between an axial compressor 404 and a radial compressor 408, for use during peak or near peak load conditions. By capturing this heat energy there can be approximately an 8-10 percent improvement in an overall operating efficiency of the power generation system 402. This system will now be described by generally following the flow of air in the system starting with air intake to the axial compressor 404. Initially in step 7a, air is taken into an axial compressor 404 and compressed during which the air is put under pressure and undergoes an increase in temperature. This air is exhausted from the axial compressor 404 in step 7b, and undergoes heat exchange (i.e., heats an oil or another flow of air) with an insulated hot oil tank 406. The cooled air flow then, in step 7c, departs the insulated hot oil tank 406 and enters the first radial compressor 408. The air is then compressed by the first radial compressor 408, exits the first radial compressor 408 and in step 7d enters a second radial compressor 410 for further compression. The number of radial compressors can be different and also the type of compressors may be different.

The air flow then goes in step 7e from the second radial compressor 410 to an energy storage unit, e.g., a Thermal Energy Store 412. The hot compressed air from the second radial compressor 410 is then cooled by the Thermal Energy Store 412. The heat energy is stored in the Thermal Energy Store 412 for future use and any water that is generated by the cooling process is drained off. The cooled compressed air is then sent to a Safety Cooler 414 in step 7f, where the air is further cooled prior to being sent in step 7g to a storage facility, e.g., cavern 416. This storage of the compressed air in the cavern 416 and the storage of the heat energy in the Thermal Energy Store 412 typically occurs during non-peak demand operation of the power generation system 402.

When the demand on the power generation system 402 increases to a desired point, energy output can be increased by releasing the stored compressed air back into the system to drive an expander 418, e.g., a turbine. For example, the cavern 416 releases some of the stored compressed air in step 7h which undergoes preheating at the insulated hot oil tank 406. The released compressed air then flows to the Thermal Energy Store 412 for heating in step 7i. Heat energy is transferred from the Thermal Energy Store 412 to the compressed air and the heated compressed air flows to a particle filter 420 in step 7j. The heated compressed air then flows in step 7k from the particle filter 420 to an expansion section of turbine 418. During expansion the air cools and undergoes a pressure drop while producing the work which drives the shaft 422 which in turn spins a portion of a generator 424 for generating power. After expansion the air flows from the turbine 418 to an air outlet 426 in step 71, typically for release to atmosphere. Power generation system 402 can also include a shaft 428 for the compressors, a gear box 430 and a motor 432.

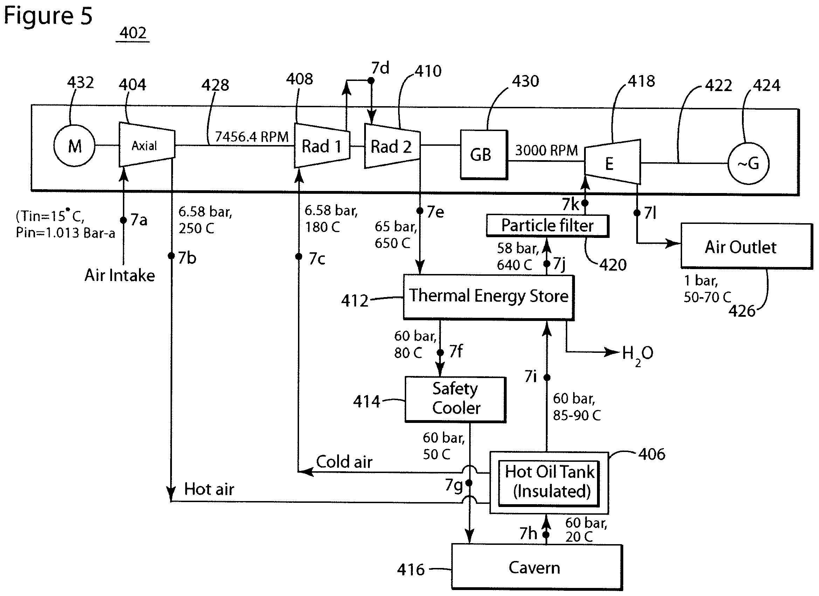

According to an exemplary embodiment, an illustrative example with values of the pressures and temperatures of the air and oil at various points of the system shown in Figure 4 is shown in Figure 5. These values are exemplary and not intended to limit the embodiments. The system in Figure 5 will operate as described above with respect to the system shown in Figure 4 thus this description is omitted.

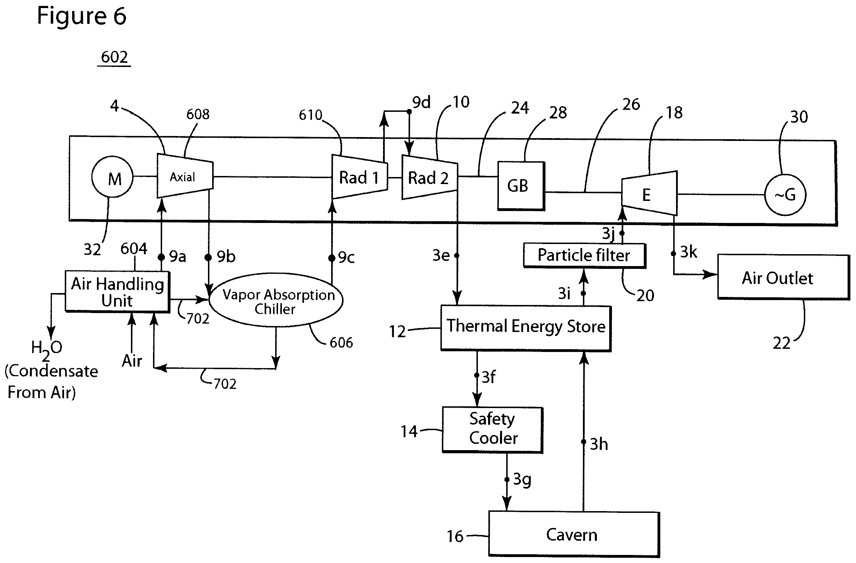

According to another exemplary embodiment, an air handling unit 604 and a vapor absorption chiller 606 can be implemented in the beginning stages of a power generation system 602 as shown in Figure 6. This allows the power generation system 602 to cool the air going into the axial compressor 608, remove moisture from this air (which in turn can reduce/remove the need for removing moisture from the air downstream at the Thermal Energy Store 12) and to reduce the temperature of the exhaust air from the axial compressor. This system will now be described by generally following the flow of air in the system up to the first radial compressor 610 followed by describing the fluid loops in the air handling unit 604 and the vapor absorption chiller 606. Initially in step 9a, air is brought into the air handling unit 604 and cooled, moisture is removed and the air is then taken into the axial compressor 608. The air is then compressed in the axial compressor 608, during which the air is put under pressure and undergoes an increase in temperature. This air is exhausted from the axial compressor 608 in step 9b, and undergoes heat exchange within a vapor absorption chiller 606. The cooled air flow then, in step 9c, departs the vapor absorption chiller 606 and enters the first radial compressor 610. The air is then compressed by the first radial compressor 610, exits the first radial compressor 610 and in step 9d enters a second radial compressor 10 for further compression. Elements 10-30 are similar to those shown in Figure 1 thus their description is omitted.

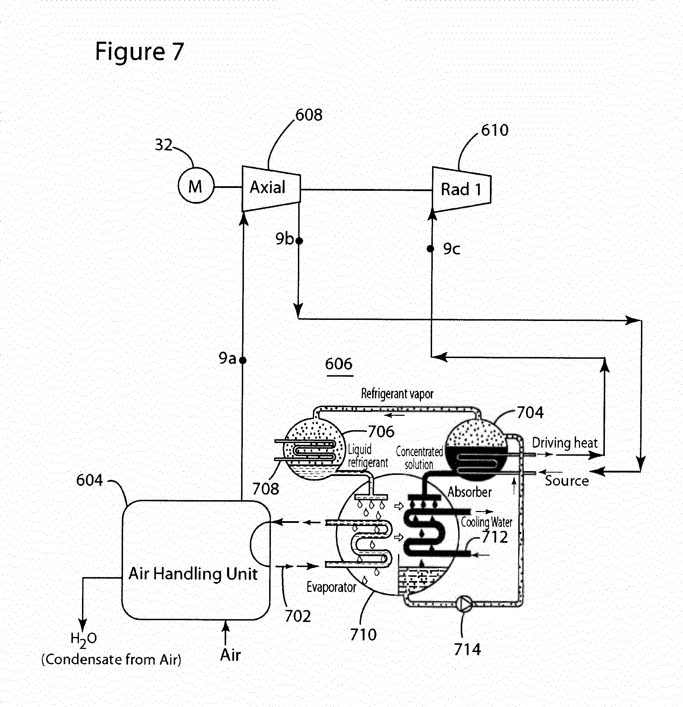

According to exemplary embodiments, the vapor absorption chiller 606 acts as a heat exchanger which in turn allows the exhaust air from the axial compressor 608 to be cooled to the desired temperature, as well as allowing the air handling unit 604 to cool the air prior to air entering the axial compressor 608 as will now be described with respect to Figure 7. Initially, air enters the air handling unit 604 and is cooled by a cooling loop 702. Cooling loop 702 can include chilled water or a glycol solution. Additionally, moisture is removed from the air. This cooled air then goes to the axial compressor 608. The hot exhaust from the axial compressor 608 enters the vapor absorption chiller 606 and is cooled en route to the first radial compressor 610 by exchanging heat with a refrigerant in a generation stage 704.

According to exemplary embodiments, the refrigerant vapor within the vapor absorption chiller 606 is evaporated during the generation stage 704 and flows to a condenser 706. The condenser 706 includes a heat exchanger 708 and outputs a liquid refrigerant which in turn cools the cooling loop 702 as shown in heat exchanger 710. This refrigerant is then cooled by cooling loop 712 and pumped back by pump 714 to the generation stage 704. Additionally, some portion of the refrigerant that remains in a liquid form from the generation stage 704 enters the heat exchanger 710 and is also cooled by the cooling loop 712 prior to being pumped back to the generation stage 704.

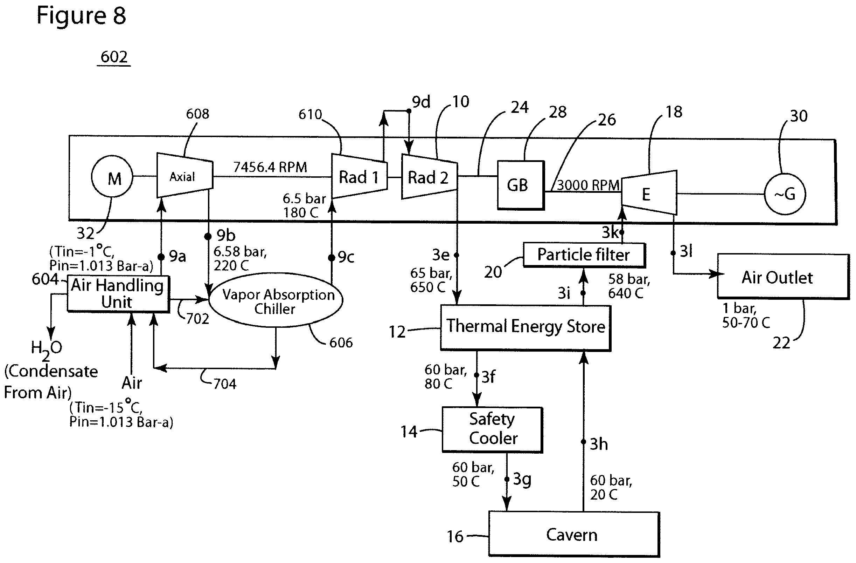

According to an exemplary embodiment, an illustrative example with values of the pressures and temperatures of the air and oil at various points of the system shown in Figure 6 is shown in Figure 8. These values are exemplary and not intended to limit the embodiments. The system in Figure 8 will operate as described above with respect to the system shown in Figure 6 thus this description is omitted.

While the above described exemplary embodiments have shown three compressors in series and capturing the heat energy between the axial and the radial compressors, other exemplary variations exist. For example, other quantities and types of compressors could be used, such as one axial and one radial compressor. Additionally, heat energy can be captured for future use from the exhaust of other compressors as desired.

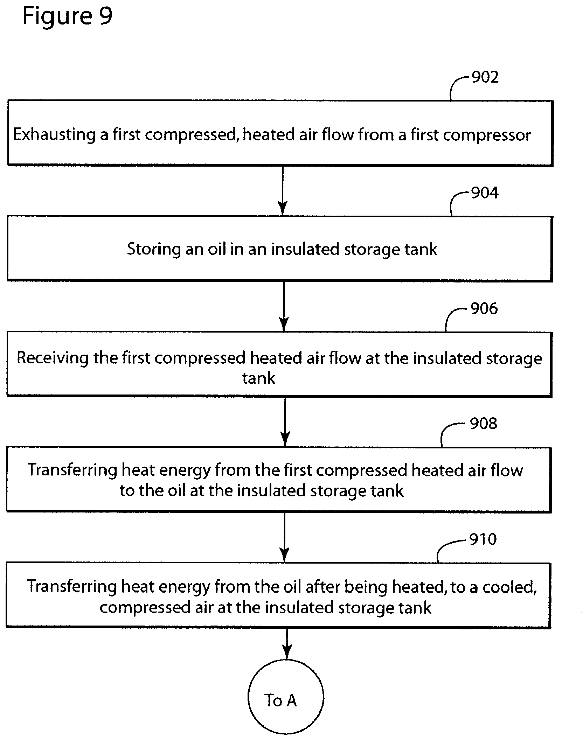

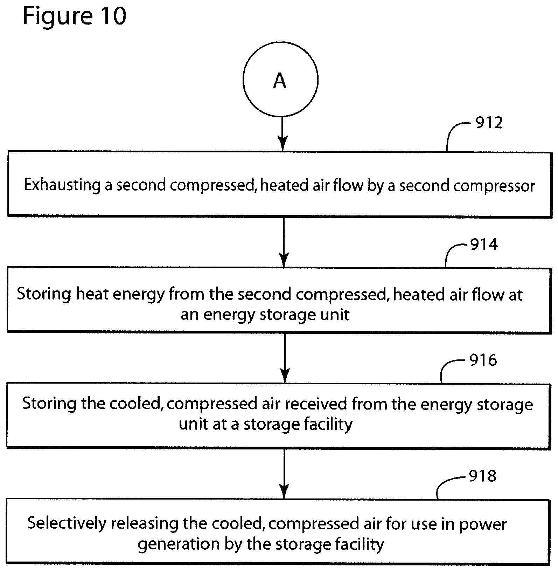

Utilizing the above-described exemplary systems according to exemplary embodiments, a method for capturing heat energy in a power generation system is shown in the flowchart of Figures 9 and 10. The method includes: a step 902 of exhausting a first compressed, heated air flow from a first compressor; a step 904 of storing an oil in an insulated storage tank; a step 906 of receiving the first compressed heated air flow at the insulated storage tank; a step 908 of transferring heat energy from the first compressed heated air flow to the oil at the insulated storage tank; a step 910 of transferring heat energy from the oil after being heated, to a cooled, compressed air at the insulated storage tank; a step 912 of exhausting a second compressed, heated air flow by a second compressor; a step 914 of storing heat energy from the second compressed, heated air flow at an energy storage unit; a step 916 of storing the cooled, compressed air received from the energy storage unit at a storage facility; and a step 918 of selectively releasing the cooled, compressed air for use in power generation by the storage facility.

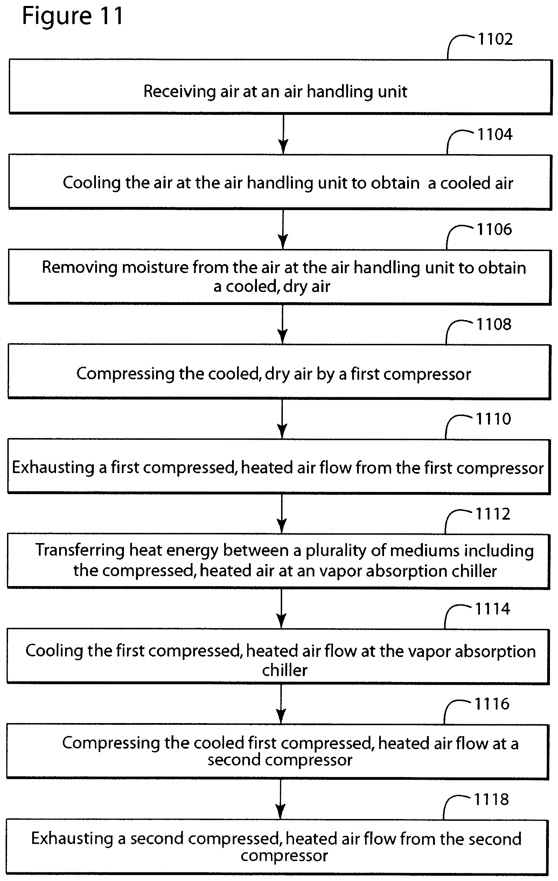

Utilizing the above-described exemplary systems according to exemplary embodiments, a method for cooling air in a power generation system is shown in the flowchart of Figure 11. The method includes: a step 1102 of receiving air at an air handling unit; a step 1104 of cooling the air at the air handling unit to obtain a cooled air; a step 1106 of removing moisture from the cooled air at the air handling unit to obtain a cooled, dry air; a step 1108 of compressing air by a first compressor; a step 1110 of exhausting a first compressed, heated air flow from the first compressor; a step 1112 of transferring heat energy between a plurality of mediums including the compressed, heated air at a vapor absorption chiller; a step 1114 of cooling the first compressed, heated air flow at the vapor absorption chiller; a step 1116 of compressing the cooled first compressed, heated air flow at a second compressor; and a step 1118 of exhausting a second compressed, heated air flow from the second compressor.

The above-described exemplary embodiments are intended to be illustrative in all respects, rather than restrictive, of the present invention. Thus the present invention is capable of many variations in detailed implementation that can be derived from the description contained herein by a person skilled in the art. All such variations and modifications are considered to be within the scope of the present invention as defined by the following claims. No element, act, or instruction used in the description of the present application should be construed as critical or essential to the invention unless explicitly described as such. Also, as used herein, the article "a" is intended to include one or more items.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A system for cooling air in a power generation system, the system comprising:
an air handling unit (604) configured to receive air, to cool the air, and to remove moisture from the air;
a first compressor (608) fluidly connected to the air handling unit (604) and configured to receive the air from the air handling unit (604) and to exhaust a first compressed, heated air flow;
a vapor absorption chiller (606) connected to the first compressor (608) configured to transfer heat energy between a plurality of mediums and to cool the first compressed, heated air flow and enabling the air handling unit (604) to cool the air prior to the air entering the first compressor (608);
a second compressor (610) connected to the vapor absorption chiller (606) configured to receive the cooled first compressed, heated air flow and to exhaust a second compressed, heated air flow;
an energy storage unit (12) connected to the second compressor (610) and configured to store heat energy from the second compressed, heated air flow; and
a storage facility (16) connected to the energy storage unit (12) and configured to store a cooled, compressed air received from the energy storage unit (12) and to selectively release the cooled, compressed air back into the power generation system, when the system for cooling air is installed in the power generation system.

2. The system of claim 1, wherein the vapor absorption chiller (606) configured to transfer heat energy between a plurality of mediums and to cool the first compressed, heated air flow comprises:
a first heat exchanger configured to transfer heat energy from the first compressed, heated air flow to a refrigerant;
a second heat exchanger fluidly connected to the first heat exchanger and configured to cool and to condense the refrigerant;
a third heat exchanger fluidly connected to the second heat exchanger and configured to transfer heat energy from a first fluid to the refrigerant, wherein the first fluid then cools the air received by the air handling unit (604); and
a fourth heat exchanger fluidly connected to the third heat exchanger and configured to transfer heat energy from the refrigerant to a second fluid.

3. The system of any preceding claim, wherein the first fluid is one of water or glycol.

4. The system of any preceding claim, wherein the vapor absorption chiller (606) further comprises:
a pump (714) configured to pump the refrigerant.

5. The system of any preceding claim, wherein the first compressor (608) is an axial compressor and the second compressor (610) is a radial compressor.

6. The system of claim 2 or any claim dependent on claim 2, wherein the third heat exchanger is connected to both the air handling unit (604) and the vapor absorption chiller (606).

7. The system of any preceding claim, wherein the cooled first compressed, heated air flow is at a temperature of substantially 180C°.

8. A method for cooling air in a power generation system including the system for cooling air of claim 1, the method comprising:
receiving air at an air handling unit (604);
cooling the air at the air handling unit (604) to obtain a cooled air;
removing moisture from the cooled air at the air handling unit (604) to obtain a cooled, dry air;
compressing the cooled, dry air by a first compressor (608);
exhausting a first compressed, heated air flow from the first compressor (608);
transferring heat energy between a plurality of mediums including the compressed, heated air at a vapor absorption chiller (606);
the vapor absorption chiller (606) enabling the air handling unit (604) to cool the air prior to the air entering the first compressor (608);
cooling the first compressed, heated air flow at the vapor absorption chiller (606);
compressing the cooled first compressed, heated air flow at a second compressor (610); and
exhausting a second compressed, heated air flow from the second compressor (610).

9. The method of claim 8, further comprising:
transferring heat energy from the first compressed, heated air flow to a refrigerant at a first heat exchanger in the vapor absorption chiller (606);
cooling the refrigerant at a second heat exchanger in the vapor absorption chiller (606);
condensing the refrigerant at the second heat exchanger in the vapor absorption chiller (606);
transferring heat energy from a first fluid to the refrigerant at a third heat exchanger in the vapor absorption chiller (606), wherein the fluid then cools the air received by the air handling unit (604); and
transferring heat energy from the refrigerant to a second fluid at a fourth heat exchanger in the vapor absorption chiller (606).

10. The method of claim 8 or claim 9, wherein the first fluid is one of water or glycol.

11. The method of any of claims 8 to 10, further comprising:
pumping the refrigerant by a pump (714).

12. The method of any of claims 8 to 11, wherein the first compressor (608) is an axial compressor.

13. The method of any of claims 8 to 12, wherein the cooled first compressed, heated air flow is at a temperature of substantially 180° C.

## Patentansprüche

1. System zum Kühlen von Luft in einem Energieerzeugungssystem, wobei das System umfasst:
eine Luftbehandlungseinheit (604), die konfiguriert ist, um Luft aufzunehmen, die Luft zu kühlen und Feuchtigkeit aus der Luft zu entfernen;
einen ersten Verdichter (608), der mit der Luftbehandlungseinheit (604) in Fluidverbindung steht und konfiguriert ist, um die Luft von der Luftbehandlungseinheit (604) aufzunehmen und einen ersten verdichteten, erwärmten Luftstrom abzugeben;
eine Dampfabsorptionskältemaschine (606), die mit dem ersten Verdichter (608) verbunden ist und zum Übertragen von Wärmeenergie zwischen einer Vielzahl von Medien und zum Kühlen des ersten verdichteten, erwärmten Luftstroms konfiguriert ist, und um zu ermöglichen, dass die Luftbehandlungseinheit (604) die Luft kühlt, bevor die Luft in den ersten Verdichter (608) eintritt;
einen zweiten Verdichter (610), der mit der Dampfabsorptionskältemaschine (606) verbunden ist und konfiguriert ist, um den gekühlten ersten verdichteten, erwärmten Luftstrom aufzunehmen und einen zweiten verdichteten, erwärmten Luftstrom abzugeben;
eine Energiespeichereinheit (12), die mit dem zweiten Verdichter (610) verbunden ist und konfiguriert ist, um Wärmeenergie aus dem zweiten verdichteten, erwärmten Luftstrom zu speichern; und
eine Speichereinrichtung (16), die mit der Energiespeichereinheit (12) verbunden ist und konfiguriert ist, um eine gekühlte Druckluft, die von der Energiespeichereinheit (12) aufgenommen wird, zu speichern und die gekühlte Druckluft selektiv zurück in das Energieerzeugungssystem freizugeben, wenn das System zum Kühlen von Luft in dem Stromerzeugungssystem installiert ist.

2. System nach Anspruch 1, wobei die Dampfabsorptionskältemaschine (606), die zum Übertragen von Wärmeenergie zwischen einer Vielzahl von Medien und zum Kühlen des ersten verdichteten, erwärmten Luftstroms konfiguriert ist, umfasst:
einen ersten Wärmetauscher, der zum Übertragen von Wärmeenergie vom ersten verdichteten, erwärmten Luftstrom auf ein Kältemittel konfiguriert ist;
einen zweiten Wärmetauscher in Fluidverbindung mit dem ersten Wärmetauscher, der zum Kühlen und Kondensieren des Kältemittels konfiguriert ist;
einen dritten Wärmetauscher, der in Fluidverbindung mit dem zweiten Wärmetauscher ist und konfiguriert ist, um Wärmeenergie von einem ersten Fluid auf das Kältemittel zu übertragen, wobei das erste Fluid dann die Luft kühlt, die von der Luftbehandlungseinheit (604) aufgenommen wird; und
einen vierten Wärmetauscher, der in Fluidverbindung mit dem dritten Wärmetauscher ist und konfiguriert ist, um Wärmeenergie von dem Kältemittel auf ein zweites Fluid zu übertragen.

3. System nach einem der vorstehenden Ansprüche, wobei das erste Fluid Wasser oder Glykol ist.

4. System nach einem der vorstehenden Ansprüche, wobei die Dampfabsorptionskältemaschine (606) ferner umfasst:
eine Pumpe (714), die zum Pumpen des Kältemittels konfiguriert ist.

5. System nach einem der vorstehenden Ansprüche, wobei der erste Verdichter (608) ein Axialverdichter und der zweite Verdichter (610) ein Radialverdichter ist.

6. System nach Anspruch 2 oder nach einem von Anspruch 2 abhängigen Anspruch, wobei der dritte Wärmetauscher sowohl mit der Luftbehandlungseinheit (604) als auch mit der Dampfabsorptionskältemaschine (606) verbunden ist.

7. System nach einem der vorstehenden Ansprüche, wobei der gekühlte erste verdichtete, erwärmte Luftstrom eine Temperatur von im Wesentlichen 180 °C aufweist.

8. Verfahren zum Kühlen von Luft in einem Stromerzeugungssystem, einschließlich des Systems zum Kühlen von Luft nach Anspruch 1, wobei das Verfahren umfasst:
Empfangen von Luft an einer Luftbehandlungseinheit (604);
Kühlen der Luft an der Luftbehandlungseinheit (604), um eine gekühlte Luft zu erhalten;
Entfernen von Feuchtigkeit aus der gekühlten Luft an der Luftbehandlungseinheit (604) zum Erhalten einer gekühlten, trockenen Luft;
Verdichten der gekühlten, trockenen Luft durch einen ersten Verdichter (608);
Abgeben eines ersten verdichteten erwärmten Luftstroms aus dem ersten Verdichter (608);
Übertragen von Wärmeenergie zwischen einer Vielzahl von Medien, einschließlich der verdichteten, erwärmten Luft, auf eine Dampfabsorptionskältemaschine (606);
wobei die Dampfabsorptionskältemaschine (606) der Luftbehandlungseinheit (604) ermöglicht, die Luft zu kühlen, bevor die Luft in den ersten Verdichter (608) eintritt;
Kühlen des ersten verdichteten, erwärmten Luftstroms an der Dampfabsorptionskältemaschine (606);
Verdichten des gekühlten ersten verdichteten, erwärmten Luftstroms an einem zweiten Verdichter (610); und
Abgeben eines zweiten verdichteten erwärmten Luftstroms aus dem zweiten Verdichter (610).

9. Verfahren nach Anspruch 8, ferner umfassend:
Übertragen von Wärmeenergie von dem ersten verdichteten, erwärmten Luftstrom auf ein Kältemittel an einem ersten Wärmetauscher in der Dampfabsorptionskältemaschine (606);
Kühlen des Kältemittels an einem zweiten Wärmetauscher in der Dampfabsorptionskältemaschine (606);
Kondensieren des Kältemittels an dem zweiten Wärmetauscher in der Dampfabsorptionskältemaschine(606);
Übertragen von Wärmeenergie von einem ersten Fluid auf das Kältemittel an einen dritten Wärmetauscher in der Dampfabsorptionskältemaschine (606), wobei das Fluid dann die Luft durch die Luftbehandlungseinheit (604) kühlt; und
Übertragen von Wärmeenergie vom Kältemittel auf ein zweites Fluid an einem vierten Wärmetauscher in der Dampfabsorptionskältemaschine (606).

10. Verfahren nach Anspruch 8 oder Anspruch 9, wobei das erste Fluid Wasser oder Glykol ist.

11. Verfahren nach einem der Ansprüche 8 bis 10, ferner umfassend:
Pumpen des Kältemittels durch eine Pumpe (714).

12. Verfahren nach einem der Ansprüche 8 bis 11, wobei der erste Verdichter (608) ein Axialverdichter ist.

13. Verfahren nach einem der Ansprüche 8 bis 12, wobei der gekühlte erste verdichtete, erwärmte Luftstrom eine Temperatur von im Wesentlichen 180 °C aufweist.

## Revendications

1. Système de refroidissement d'air dans un système de production d'énergie, le système comprenant :
une unité de traitement d'air (604) configurée pour recevoir de l'air, pour refroidir l'air, et pour retirer l'humidité de l'air ;
un premier compresseur (608) raccordé fluidiquement à l'unité de traitement d'air (604) et configuré pour recevoir l'air provenant de l'unité de traitement d'air (604) et pour évacuer un premier flux d'air chauffé comprimé ;
un refroidisseur à absorption de vapeur (606) raccordé au premier compresseur (608) configuré pour transférer l'énergie thermique entre une pluralité de milieux et pour refroidir le premier flux d'air chauffé comprimé et permettre à l'unité de traitement d'air (604) de refroidir l'air avant que l'air n'entre dans le premier compresseur (608) ;
un second compresseur (610) raccordé au refroidisseur à absorption de vapeur (606) configuré pour recevoir le premier flux d'air chauffé comprimé refroidi et pour évacuer un second flux d'air chauffé comprimé ;
une unité de stockage d'énergie (12) raccordée au second compresseur (610) et configurée pour stocker de l'énergie thermique à partir du second flux d'air chauffé comprimé ; et
une installation de stockage (16) raccordée à l'unité de stockage d'énergie (12) et configurée pour stocker un air comprimé refroidi reçu de l'unité de stockage d'énergie (12) et pour libérer sélectivement l'air comprimé refroidi dans le système de production d'énergie, lorsque le système de refroidissement d'air est installé dans le système de production d'énergie.

2. Système selon la revendication 1, dans lequel le refroidisseur à absorption de vapeur (606) configuré pour transférer de l'énergie thermique entre une pluralité de milieux et pour refroidir le premier flux d'air chauffé comprimé comprend :
un premier échangeur de chaleur configuré pour transférer de l'énergie thermique du premier flux d'air chauffé comprimé à un réfrigérant ;
un deuxième échangeur de chaleur raccordé fluidiquement au premier échangeur de chaleur et configuré pour refroidir et condenser le réfrigérant ;
un troisième échangeur de chaleur raccordé fluidiquement au deuxième échangeur de chaleur et configuré pour transférer de l'énergie thermique d'un premier fluide au réfrigérant, dans lequel le premier fluide refroidit ensuite l'air reçu par l'unité de traitement d'air (604) ; et
un quatrième échangeur de chaleur raccordé fluidiquement au troisième échangeur de chaleur et configuré pour transférer de l'énergie thermique du réfrigérant à un second fluide.

3. Système selon une quelconque revendication précédente, dans lequel le premier fluide est un parmi l'eau ou le glycol.

4. Système selon une quelconque revendication précédente, dans lequel le refroidisseur à absorption de vapeur (606) comprend en outre :
une pompe (714) configurée pour pomper le réfrigérant.

5. Système selon une quelconque revendication précédente, dans lequel le premier compresseur (608) est un compresseur axial et le second compresseur (610) est un compresseur radial.

6. Système selon la revendication 2 ou une quelconque revendication dépendante de la revendication 2, dans lequel le troisième échangeur de chaleur est raccordé à la fois à l'unité de traitement d'air (604) et au refroidisseur à absorption de vapeur (606).

7. Système selon une quelconque revendication précédente, dans lequel le premier flux d'air chauffé comprimé refroidi est à une température de sensiblement 180 °C.

8. Procédé de refroidissement d'air dans un système de production d'énergie incluant le système de refroidissement d'air selon la revendication 1, le procédé comprenant :
une réception de l'air au niveau d'une unité de traitement d'air (604) ;
un refroidissement de l'air au niveau de l'unité de traitement d'air (604) pour obtenir un air refroidi ;
une élimination de l'humidité de l'air refroidi au niveau de l'unité de traitement d'air (604) pour obtenir un air sec refroidi ;
une compression de l'air sec refroidi par un premier compresseur (608) ;
une évacuation d'un premier flux d'air chauffé comprimé provenant du premier compresseur (608) ;
un transfert d'énergie thermique entre une pluralité de milieux incluant l'air chauffé comprimé au niveau d'un refroidisseur à absorption de vapeur (606) ;
le refroidisseur à absorption de vapeur (606) permettant à l'unité de traitement d'air (604) de refroidir l'air avant que l'air n'entre dans le premier compresseur (608) ;
un refroidissement du premier flux d'air chauffé comprimé au niveau du refroidisseur à absorption de vapeur (606) ;
une compression du premier flux d'air chauffé comprimé refroidi au niveau d'un second compresseur (610) ; et
une évacuation d'un second flux d'air chauffé comprimé provenant du second compresseur (610).

9. Procédé selon la revendication 8, comprenant en outre :
un transfert d'énergie thermique du premier flux d'air chauffé comprimé à un réfrigérant au niveau d'un premier échangeur de chaleur dans le refroidisseur à absorption de vapeur (606) ;
un refroidissement du réfrigérant au niveau d'un deuxième échangeur de chaleur dans le refroidisseur à absorption de vapeur (606) ;
une condensation du réfrigérant au niveau du deuxième échangeur de chaleur dans le refroidisseur à absorption de vapeur (606) ;
un transfert de l'énergie thermique provenant d'un premier fluide au réfrigérant au niveau d'un troisième échangeur de chaleur dans le refroidisseur à absorption de vapeur (606), dans lequel le fluide refroidit ensuite l'air reçu par l'unité de traitement d'air (604) ; et
un transfert d'énergie thermique du réfrigérant à un second fluide au niveau d'un quatrième échangeur de chaleur dans le refroidisseur à absorption de vapeur (606).

10. Procédé selon la revendication 8 ou la revendication 9, dans lequel le premier fluide est un parmi l'eau ou le glycol.

11. Procédé selon l'une quelconque des revendications 8 à 10, comprenant en outre :
un pompage du réfrigérant par une pompe (714).

12. Procédé selon l'une quelconque des revendications 8 à 11, dans lequel le premier compresseur (608) est un compresseur axial.

13. Procédé selon l'une quelconque des revendications 8 à 12, dans lequel le premier flux d'air chauffé comprimé refroidi est à une température de sensiblement 180 °C.
